# EUROPÄISCHE PATENTSCHRIFT

(11) **EP 3 204 250 B1**
(45) Veröffentlichungstag und Bekanntmachung des Hinweises auf die Patenterteilung: **04.11.2020**
(21) Anmeldenummer: 15763248.0
(22) Anmeldetag: 01.09.2015
(51) Int. Cl.: B60K 15/067, B60K 15/063

(54) **UNTERBODENBAUGRUPPE, ANORDNUNG ZUM TOLERANZAUSGLEICH EINES FLUIDTANKS UND VERFAHREN ZUR MONTAGE EINER UNTERBODENBAUGRUPPE**
UNDERBODY ASSEMBLY, ARRANGEMENT FOR TOLERANCE EQUALIZATION OF A FLUID TANK, AND METHOD FOR ASSEMBLING AN UNDERBODY ASSEMBLY
MODULE SOUS CAISSE, ENSEMBLE DE COMPENSATION DES TOLÉRANCES D'UN RÉSERVOIR DE FLUIDE, ET PROCÉDÉ DE MONTAGE D'UN MODULE SOUS CAISSE

(30) Priorität: 09.10.2014 DE 102014220532
(43) Veröffentlichungstag der Anmeldung: 16.08.2017
(73) Patentinhaber: Bayerische Motoren Werke Aktiengesellschaft, 80809 München (DE)
(72) Erfinder: BAUER, Florian, 83558 Maitenbeth (DE); TUSCHL, Guenther, 83059 Kolbermoor (DE)
(86) Internationale Anmeldenummer: PCT/EP2015/069946
(87) Internationale Veröffentlichungsnummer: WO 2016/055216

(56) Entgegenhaltungen:
- CN-U- 203 611 738
- DE-A1-102011 009 636
- DE-A1-102012 023 159
- GB-A- 2 239 223
- US-A- 4 469 340

## Beschreibung

Die Erfindung betrifft eine Anordnung eines Fluidtanks an einem Fahrzeug nach dem Oberbegriff des ersten Patentanspruchs. Insbesondere betrifft die vorliegende Erfindung ein neuartiges Befestigungskonzept für einen Fluidtank, welches auch den Körperschalleintrag in ein Fahrzeug reduziert. Zum Stand der Technik wird neben der GB 2 239 223 A und der CN 203 611 738 U insbesondere auf die DE 10 2011 009 636 A1 verwiesen.

Fortbewegungsmittel (im Folgenden der Einfachheit halber "Fahrzeug(e)") mit Verbrennungsmotoren führen in der Regel einen fest am Fahrzeug befestigten Vorratsspeicher für Kraftstoff mit, welcher in Form eines Kraftstofftanks meist am Unterboden des Fahrzeuges befestigt ist. Der Kraftstofftank wird dabei häufig mittels metallener Spannbänder am Unterboden befestigt. Die Spannbänder werden dabei mit je zwei Schrauben an der Karosserie des Fahrzeuges verschraubt und pressen den Tank in Z-Richtung gegen die Karosserie. Die Gegenlager an der Karosserie werden dabei meist als geschäumte Klebepads und/oder als Elastomerfedern ausgeführt. Die üblicherweise eingesetzten, in Kunststoff ausgeführten Kraftstofftanks weisen eine vergleichsweise große Toleranz in deren äußeren geometrischen Abmessungen auf, die zusammen mit großen Toleranzketten der Karosserie eine hohe Ungenauigkeit der Spannbandposition und in der Serienproduktion stark streuende Spannkräfte der Spannbänder zur Folge hat. Dies wiederum verursacht bei Toleranzgrenzlagen Kontaktstellen zwischen Tank und Karosserie (abseits der elastischen Gegenlager) mit damit verbundenem Bauteilabrieb bis hin zum Bauteilversagen sowie unerwünschte Geräuscherzeugung und damit verbundenem Körperschalleintrag. Zudem ist eine Überbeanspruchung der Spannbänder und infolge dessen ein Ausfall des jeweiligen Spannbandes möglich. Zudem wird im Stand der Technik keine definierte Befestigung des Kraftstofftanks in Längs- und Querrichtung durch die Spannbänder dargestellt. Es ist daher eine Aufgabe der vorliegenden Erfindung, die vorstehend identifizierten Nachteile des Standes der Technik auszuräumen.

Die vorstehend genannte Aufgabe wird erfindungsgemäß durch eine Anordnung nach Anspruch 1 gelöst. Der Fluidtank kann als Kraftstofftank, als Behälter zur Aufbewahrung von Harnstoff-Fluiden zur Abgasnachbereitung o.Ä. ausgestaltet und zur Montage am Unterboden eines Fahrzeugs vorgesehen sein. Die Anordnung umfasst mindestens ein Spannband, mittels welchem der Fluidtank in einer Kavität eines Unterbodens des Fahrzeugs gehaltert wird. Das Spannband umfasst dabei ein erstes und ein zweites Ende. Mit anderen Worten spannt das Spannband den Fluidtank in Richtung des Fahrzeugs vor. Das zweite Ende des Spannbandes ist dabei mittels einer Schraubverbindung am Fahrzeug festgelegt. Weiter ist ein fahrzeugseitiges Lager vorgesehen, welches dazu eingerichtet ist, das Spannband am Fahrzeug festzulegen. Zwischen dem fahrzeugseitigen Lager und dem Spannband ist ein Elastomerelement vorgesehen, über welches das erste Ende des Spannbandes verschieblich gegenüber dem fahrzeugseitigen Lager befestigt ist. Kräfte werden dabei nur über Reibschluss übertragen. Auf diese Weise kann ein Toleranzausgleich für den Fluidtank dargestellt werden, welcher die vorgenannten Probleme des Standes der Technik ausräumt. Das fahrzeugseitige Lager weist eine Neigung gegenüber einer Horizontalen auf, welche beispielsweise im Bereich zwischen 15 und 75 Grad. Durch die Lagerneigung führen Lagerkräfte in einer Hauptrichtung zu einem zusätzlichen Kraftvektor in orthogonaler Anordnung. Auf diese Weise ist es möglich, Kräfte zur Vorspannung des Fluidtanks in zwei unterschiedliche Richtungen zu erzeugen, welche orthogonal zueinander angeordnet sind. In praktischen Anwendungen sind die Richtungen beispielsweise horizontal bzw. vertikal orientiert, um die relative Lage des Fluidtanks bestmöglich vorab zu definieren.

Die Unteransprüche zeigen bevorzugte Weiterbildungen der vorliegenden Erfindung.

Bevorzugt ist das Elastomerelement so ausgestaltet, dass es die gesamten Kräfte zwischen dem Spannband und dem fahrzeugseitigen Lager überträgt. Es ist also nicht durch eine steife Struktur durchsetzt, wie dies beispielsweise bei Muffen zur Körperschallentkopplung von Schaubverbindungen (durch den Schraubbolzen) der Fall ist. Daher können auch größere Toleranzen ausgeglichen und eine sichere Vorspannung des Fluidtanks erreicht werden. Bevorzugt kann das Elastomerelement derartige zwischen dem Spannband einerseits und dem fahrzeugseitigen Lager andererseits angeordnet sein, dass es mit zunehmender, durch das Spannband auf den Fluidtank wirkender Haltekraft, eine zunehmende Druckkraft (erfindungsgemäß) oder eine zunehmende Zugkraft (nicht erfindungsgemäß) erfährt. Mit anderen Worten kann das Elastomerelement bezüglich des Fluidtanks diesseits oder jenseits des fahrzeugseitigen Lagers angeordnet sein. Entsprechend liegt das Spannband auf dem Elastomerelement erfindungsgemäß auf oder ist, nicht erfindungsgemäß, unter das Elastomerelement gehängt. Während durch ein Aufliegen des Spannbandes auf dem Elastomerelement und durch ein Aufliegen des Elastomerelementes auf dem fahrzeugseitigen Lager das Elastomerelement ideal belastet wird, kann im umgekehrten Falle eines unter das fahrzeugseitige Lager gehängten Spannbandes eine besonders einfache Montage erfolgen.

Bevorzugt kann das Spannband zwei unterschiedliche Abschnitte aufweisen, welche sich in unterschiedliche Richtungen erstrecken. Auf diese Weise kann ein erster Abschnitt des Spannbandes den Fluidtank hinsichtlich einer ersten Richtung (z. B. vertikal) und ein zweiter Abschnitt des Spannbandes den Fluidtank hinsichtlich einer zweiten Richtung (z. B. horizontal) fixieren. Die erste Richtung und die zweite Richtung können beispielsweise im Wesentlichen orthogonal zueinander orientiert sein. Je nach Ausgestaltung einer Unterseite des Fluidtanks können beide Abschnitte auch jeweils in etwa 45° gegenüber einer Vertikalen geneigt sein. In jedem geschilderten Fall kann das Spannband so eine vordefinierte Positionierung des Fluidtanks hinsichtlich mindestens zweier Richtungen bewirken.

Über eine Schraubverbindung kann das Spannband mit dem Elastomerelement lösbar verbunden sein.

Die Verbindung zwischen dem Spannband und dem Elastomerelement kann ihrerseits körperschallmäßig entkoppelnd ausgestaltet sein. Beispielsweise kann ein Schraubbolzen, welcher das Spannband durchsetzt, mit einer elastischen Hülse umgeben sein, welche das Spannband beidseitig durchragt und auch beim Sichern des Bolzens mit einer Mutter einen metallischen Kontakt zwischen dem Schraubbolzen bzw. der Mutter und dem Spannband vermeidet. Hierzu kann das körperschallmäßig entkoppelnde Element eine umlaufende Nut aufweisen, welche das Spannband anteilig aufzunehmen im Stande ist.

Alternativ oder zusätzlich kann vorgesehen sein, dass das Spannband im Zuge der Montage einen Formschluss mit dem Elastomerelement eingeht, durch welchen bei einer Festlegung eines gegenüberliegenden Endes des Spannbandes automatisch gesichert wird. Beispielsweise kann das Spannband hierzu in eine Kavität an dem Elastomerelement oder einem das Elastomerelement abschließenden Metallelementes eingesteckt werden, im Zuge der Montage verschwenkt und dabei gegen ein unbeabsichtigtes Lösen gesichert werden. Diese gesicherte Position wird durch eine gegenüberliegende Befestigung des zweiten Endes des Spannbandes z.B. mittels der genannten Schraubverbindung aufrechterhalten.

Die Anordnung verfügt über eine zweite Schraubverbindung, welche zur Festlegung des Spannbandes an dem Fahrzeug an einem dem mit dem Elastomerelement verbundenen Ende des Spannbandes gegenüberliegenden Endes (dem zweiten Ende) angeordnet ist. Die zweite Schraubverbindung kann bei hinreichendem Toleranzausgleich durch das vorstehend eingeführte Elastomerelement in herkömmlicherweise und/oder körperschallentkoppelt ausgestaltet sein.

Gemäß einem zweiten Aspekt der vorliegenden Erfindung wird eine Unterbodenbaugruppe für ein Fahrzeug vorgeschlagen, welche einen Fluidtank (z. B. als Kraftstofftank), ein elastisches Gegenlager und eine Anordnung gemäß dem erstgenannten Erfindungsaspekt umfasst. Der Fluidtank wird erfindungsgemäß zwischen den elastischen Gegenlagern und dem Spannband der Anordnung angeordnet und eingespannt. Die elastischen Gegenlager sind zwischen dem Fahrzeug beziehungsweise dessen Unterboden und dem Fluidtank vorgesehen und erhöhen die Möglichkeiten eines Toleranzausgleiches. Das Spannband kann insbesondere einen Bodenbereich des Fluidtanks in im Wesentlichen vertikaler Richtung vorspannen und einen Seitenbereich des Fluidtanks in im Wesentlichen horizontaler Richtung vorspannen. Hierzu kann das Spannband bereits vor der Montage an der Unterbodenbaugruppe zwei Abschnitte aufweisen, welche in einem Winkel ungleich 180 Grad zueinander erstreckt sind. Insbesondere zwischen 65 und 125 Grad, bevorzugt zwischen 80 und 100 Grad zueinander angeordnete Abschnitte können eine Fixierung des Fluidtanks hinsichtlich zweier zueinander orthogonaler Richtungen gewährleisten. Bevorzugt weist die Hauptbetriebsrichtung (Vorzugsrichtung des Toleranzausgleichs) des Elastomerlagers Anteile in beide Richtungen auf, um auch den Toleranzausgleich sowie die Vorspannung des Fluidtanks in beide Richtungen zu ermöglichen. Dies wird durch eine Neigung des fahrzeugseitigen Lagers erreicht.

Gemäß einem dritten Aspekt der vorliegenden Erfindung wird ein Verfahren nach Anspruch 8 zur Montage einer Unterbodenbaugruppe vorgeschlagen, wie sie in Verbindung mit dem zweitgenannten Aspekt der vorliegenden Erfindung beschrieben worden ist. Zwei erste Schritte des erfindungsgemäßen Verfahrens bestehen in dem Einsetzen des Fluidtanks in eine Kavität des Fahrzeugs und dem Einsetzen eines ersten Endes des Spannbandes an dem fahrzeugseitigen Lager unter Vermittlung des Elastomerelementes. Welcher der beiden Schritte zuerst ausgeführt wird, ist nicht notwendigerweise festgelegt und hängt davon ab, ob im konkreten Fall ein Einsetzen des Fluidtanks noch nach dem Befestigen des ersten Endes des Spannbandes an dem fahrzeugseitigen Lager erfolgen kann. Erfindungsgemäß wird anschließend ein zweites Ende des Spannbandes, welches dem ersten Ende gegenüberliegt, an dem Fahrzeug befestigt. Die elastische Lagerung des ersten Endes des Spannbandes gemäß der vorliegenden Erfindung ermöglicht eine Verschwenkung des Spannbandes in weitem Rahmen, sodass zusätzliche Schritte, wie sie bei einer unelastischen Lagerung des ersten Spannbandes erforderlich wären, entfallen können. Beispielsweise kann eine das erste Ende des Spannbandes sichernde Schraubverbindung unter gewissen Umständen vollständig angezogen werden, bevor das zweite Ende des Spannbandes am Fahrzeug befestigt wird.

Bei der Verschwenkung stützt sich das Spannband am Tank ab und verschiebt das Elastomerlager auf der schiefen Ebene. Durch Reibkraft zwischen Elastomer und Auflage entsteht eine Gegenkraft im Spannband, die über die Abstützstelle in den Tank eingeleitet wird und bereits während der Montage für das Aufbringen einer Kraftkomponente orthogonal zur Hauptbefestigungsrichtung des Tanks sorgt.

Gemäß einem vierten Aspekt der vorliegenden Erfindung wird ein Fahrzeug vorgeschlagen, welches eine Anordnung gemäß dem erstgenannten Erfindungsaspekt und/oder eine Unterbodenbaugruppe gemäß dem zweitgenannten Erfindungsaspekt umfasst. Die Merkmale, Merkmalskombinationen und die sich aus diesen ergebenden Vorteile entsprechen denen der jeweils vorgenannten Erfindungsaspekte derart ersichtlich, dass zur Vermeidung von Wiederholungen auf die obigen Ausführungen verwiesen wird.

Weitere Einzelheiten, Merkmale und Vorteile der Erfindung ergeben sich aus der nachfolgenden Beschreibung und den Figuren. Es zeigen:
- Figur 1: ein erstes Ausführungsbeispiel einer Unterbodenbaugruppe mit einem Ausführungsbeispiel einer Anordnung zum Toleranzausgleich eines Fluidtanks gemäß der vorliegenden Erfindung;
- Figur 2: eine Veranschaulichung unterschiedlicher Schritte bei der Montage eines zweiten Ausführungsbeispiels einer erfindungsgemäßen Unterbodenbaugruppe; und
- Figur 3: ein Flussdiagramm veranschaulichend Schritte eines Ausführungsbeispiels eines erfindungsgemäßen Verfahrens.

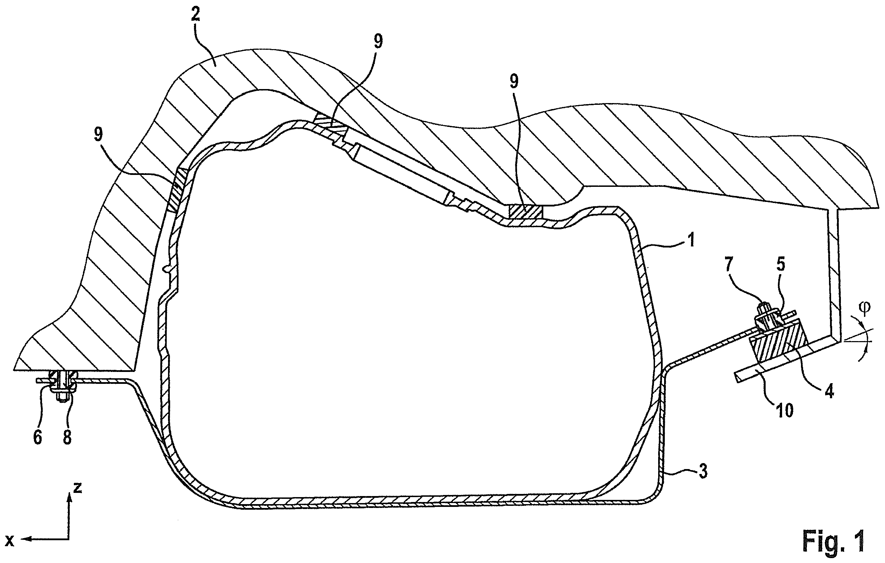

Figur 1 zeigt den Unterboden eines Fahrzeugs 2, in dessen Kavität drei elastische Gegenlager 9 zur Anlage eines Kraftstofftanks 1 als Fluidtank vorgesehen sind. Ein Spannband 3 ist einerseits durch eine Schraubverbindung mit einer Schraube 8 am Fahrzeug 2 befestigt, wobei der Bolzen der Schraube 8 von einem elastischen Element 6 zur Körperschallentkopplung umgeben ist. Das elastische Element 6 weist eine umlaufende Nut auf, in welche das Spannband 3 eingreift. Ein wannenförmiger Abschnitt des Spannbandes 3 spannt den Fluidtank 1 in vertikaler Richtung (Z-Richtung) sowie in horizontaler Richtung (X-Richtung) vor. Die Bodengruppe des Fahrzeuges 2 weist weiter ein gegenüber einer Vertikalen (entsprechend der X-Richtung) sowie gegenüber einer Horizontalen (entsprechend der Z-Richtung) geneigtes fahrzeugseitiges Lager 10 auf, dessen Haupterstreckungsrichtung einen Winkel ϕ gegenüber der X-Richtung aufweist. Oberhalb dieses fahrzeugseitigen Lagers 10 ruht ein erfindungsgemäß vorgesehenes Elastomerelement 4, in dessen Oberseite das Spannband über eine Schraube 7 mit einem elastischen Element 5 zur Körperschallentkopplung eingeschraubt ist. Auf diese Weise kann das Elastomerelement 4 durch Druckkräfte in X- sowie in Z-Richtung Toleranzen des Fluidtanks selbstständig ausgleichen. Die Gegenlager 9 erweitern den Toleranzbereich entsprechend.

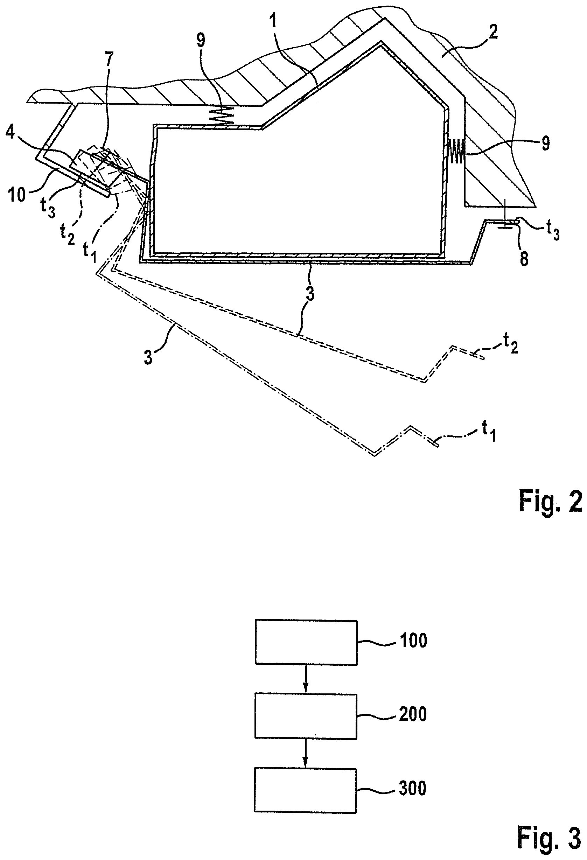

Figur 2 zeigt eine schematische Ansicht eines zweiten Ausführungsbeispiels einer erfindungsgemäßen Unterbodenbaugruppe eines Fahrzeuges 2, wobei die elastischen Gegenlager 9 als Federelemente dargestellt sind. Das Spannband 3 liegt über ein Elastomerelement 4, in welchem es mittels einer Schraube 7 befestigt ist, auf einem fahrzeugseitigen Lager 10 auf, welches gegenüber der Horizontalen geneigt ausgeführt ist. Das Spannband 3 ist entsprechend einer Montagereihenfolge in drei unterschiedlichen Lagen zu aufeinanderfolgenden Zeitpunkten t₁, t₂, t₃ dargestellt. Mit anderen Worten erfolgt gemäß der dargestellten Montagereihenfolge zunächst die Positionierung des Fluidtanks 1 am Fahrzeug 2, anschließend eine Befestigung des Spannbandes über das erfindungsgemäß vorgesehene Elastomerelement und erst anschließend eine Verschwendung des Spannbandes in seine endgültige Montageposition, in welcher es über eine Schraube 8 am Unterboden des Fahrzeuges 2 befestigt wird.

Figur 3 zeigt Schritte eines Ausführungsbeispiels eines erfindungsgemäßen Verfahrens zur Montage einer Unterbodenbaugruppe, wie sie in den Figuren 1 und 2 dargestellt ist. In Schritt 100 wird der Fluidtank in eine Kavität des Fahrzeugs eingesetzt. In Schritt 200 wird ein erstes Ende des Spannbandes an dem fahrzeugseitigen Lager befestigt. In Schritt 300 wird ein zweites Ende des Spannbandes, welches dem ersten Ende gegenüberliegt, an dem Fahrzeug befestigt. Sofern das erfindungsgemäß vorgesehene Elastomerelement ein Verschwenken um einen hinreichend großen Winkelbereich zulässt, muss nach dem Befestigen des zweiten Endes des Spannbandes die Befestigung des ersten Endes des Spannbandes nicht erneut angefasst werden (z. B. um eine dort vorhandene Schraube final festzuziehen), was den Montagevorgang verkürzt.

Die Erfindung schlägt eine Modifikation je eines Anschraubpunktes des Spannbandes durch Verwendung eines ausreichend groß dimensionierten Elastomerlagers vor, welches die Kräfte aus dem Spannband über eine in Relation zum Koordinatensystem des Fahrzeugs schiefe Ebene einleitet. Die Krafteinleitung über die schiefe Ebene ermöglicht es, eine Kraftkomponente sowohl in X-Richtung als auch in Y-Richtung und gegebenenfalls auch in Z-Richtung in das Spannband einzubringen und über ein Elastomerelement langfristig aufrecht zu erhalten. Somit können eine Kraftkomponente in X- und gegebenenfalls in Y-Richtung sowie in Z-Richtung auf den Tank aufgebracht werden. Bei der Montage wird das Spannband in die Vorrichtung zur Lagerung eingekippt, wobei sich das Spannband am Tank abstützt und das Elastomerlager auf der schiefen Ebene gegen dessen Rückstellkraft verschiebt. Auf diese Weise wird eine Kraftkomponente in X-Richtung auf den Tank aufgebracht. Die Bewegungsfreiheit des Elastomerelementes auf der schiefen Ebene ermöglicht einen Ausgleich großer Geometrietoleranzen. Die vorliegende Erfindung verkürzt auf diese Weise die Montagezeit, da nur noch eine Schraube anzusetzen und festzuziehen ist. Zudem wird eine von den Toleranzen der Baugruppe weitgehend unabhängig vordefinierbare Vorspannung des Tanks in alle Richtungen ermöglicht. Infolgedessen verhindert die erfindungsgemäß ausgestaltete Unterbodenbaugruppe eine Relativbewegung zwischen dem Tank und dem Unterboden an den erforderlichen Kontaktstellen. Entsprechend werden die für die Befestigung relevanten geometrischen Toleranzen des Fluidtanks beziehungsweise der Unterbodenbaugruppe wirksam ausgeglichen.

### Bezugszeichenliste:

- 1: Fluidtank
- 2: Fahrzeug
- 3: Spannband
- 4: Elastomerelement
- 5, 6: elastisches Element zur Körperschallentkopplung
- 7, 8: Schraube
- 9: elastisches Element
- 10: fahrzeugseitiges Lager
- 100: Verfahrensschritt
- 200: Verfahrensschritt
- 300: Verfahrensschritt
- X, Y, Z: Richtungen bzgl. Fahrzeug
- Φ: Winkel gegenüber der X-Richtung

## Patentansprüche

1. Anordnung eines Fluidtanks (1) an einem Fahrzeug (2), insbesondere Kraftfahrzeug, umfassend:
- ein Spannband (3) mit einem ersten und einem zweiten Ende,
- ein fahrzeugseitiges Lager (10) und
- ein Elastomerelement (4), wobei
das Spannband (3) den Fluidtank (10) in einer Kavität eines Unterbodens des Fahrzeugs (2) hält,
wobei das fahrzeugseitige Lager (10) eingerichtet ist, das Spannband (3) mit dem ersten Ende am Fahrzeug (2) zu befestigen, und
das Elastomerelement (4) zwischen dem Spannband (3) einerseits und dem fahrzeugseitigen Lager (10) andererseits angeordnet ist **dadurch gekennzeichnet, dass**
das zweite Ende des Spannbandes (3) mittels einer Schraubverbindung (8) am Fahrzeug festgelegt ist und wobei
das Elastomerelement (4) auf dem fahrzeugseitigen Lager (10) aufliegt, wobei das erste Ende des Spannbandes (3) über das Elastomerelement (4) verschieblich gegenüber dem fahrzeugseitigen Lager (10) angeordnet ist und wobei
die Kräfte zwischen dem Elastomerelement (4) und dem fahrzeugseitigen Lager (10) nur über Reibschluss übertragen werden und wobei das fahrzeugseitige Lager (10) eine Neigung (φ) gegenüber einer Horizontalen (x) aufweist.

2. Anordnung nach Anspruch 1, wobei das Elastomerelement (4) derartig zwischen dem Spannband (3) einerseits und dem fahrzeugseitigen Lager (10) andererseits angeordnet ist, dass
- das Elastomer des Elastomerelementes (4) die gesamten Kräfte zwischen dem Spannband (3) und dem fahrzeugseitigen Lager (10) überträgt, und/oder
- das Elastomerelement (4) mit zunehmender, durch das Spannband (3) auf den Fluidtank (1) wirkender Haltekraft eine zunehmende Druckkraft erfährt.

3. Anordnung nach Anspruch 1 oder 2, wobei das Spannband (3) derart ausgestaltet ist, dass es den Fluidtank (1)
- hinsichtlich einer ersten Richtung (x) und
- hinsichtlich einer zweiten Richtung (z) fixiert, wobei die erste Richtung (x) und die zweite Richtung (z) im Wesentlichen orthogonal zueinander orientiert sind.

4. Anordnung nach einem der vorstehenden Ansprüche, wobei die Neigung (φ) gegenüber der Horizontalen (x) im Bereich zwischen 15° und 75°, bevorzugt zwischen 25° und 65° liegt.

5. Anordnung nach einem der vorstehenden Ansprüche, weiter umfassend eine Schraubverbindung (7), welche das erste Ende des Spannbands (3) mit dem Elastomerelement (4) verbindet.

6. Unterbodenbaugruppe für ein Fahrzeug (2) umfassend
- einen Fluidtank (1), insbesondere zur Aufnahme eines Kraftstoffes,
- elastische Gegenlager (9) und
- eine Anordnung, insbesondere zwei Anordnungen, nach einem der vorstehenden Ansprüche, wobei
der Fluidtank (1) zwischen den elastischen Gegenlagern (9) und dem Spannband (3) der Anordnung bzw. den Anordnungen angeordnet und vorgespannt ist.

7. Unterbodenbaugruppe nach Anspruch 6, wobei
- das Spannband (3) einen Bodenbereich des Fluidtanks (1) in im Wesentlichen vertikaler Richtung (z) vorspannt und einen Seitenbereich des Fluidtanks (1) in im Wesentlichen horizontaler Richtung (x) vorspannt.

8. Verfahren zur Montage einer Unterbodenbaugruppe nach einem der vorstehenden Ansprüche 6 oder 7 umfassend die Schritte:
- Einsetzen (100) des Fluidtanks (1) in eine Kavität des Fahrzeugs (2),
- Befestigen (200) eines ersten Endes des Spannbandes (3) an dem fahrzeugseitigen Lager (10), und anschließend
- Befestigen (300) eines zweiten, dem ersten Ende gegenüberliegenden Endes des Spannbandes (3) an dem Fahrzeug (2).

9. Fahrzeug umfassend
- eine Anordnung nach einem der Ansprüche 1 bis 5, und/oder
- eine Unterbodenbaugruppe nach einem der Ansprüche 6 oder 7.

## Claims

1. Arrangement of a fluid tank (1) on a vehicle (2), in particular motor vehicle, comprising:
- a tension strap (3) with a first and a second end,
- a vehicle-side bearing (10) and
- an elastomer element (4), wherein
the tension strap (3) holds the fluid tank (10) in a cavity of an underbody of the vehicle (2),
wherein
the vehicle-side bearing (10) is designed for fastening the tension strap (3) with the first end to the vehicle (2), and
the elastomer element (4) is arranged between the tension strap (3) and the vehicle-side bearing (10),
**characterized in that**
the second end of the tension strap (3) is secured to the vehicle by means of a screw connection (8), and wherein
the elastomer element (4) rests on the vehicle-side bearing (10),
wherein the first end of the tension strap (3) is arranged so as to be displaceable via the elastomer element (4) in relation to the vehicle-side bearing (10), and wherein
the forces between the elastomer element (4) and the vehicle-side bearing (10) are transmitted only via a frictional connection,
and wherein the vehicle-side bearing (10) has an inclination (φ) in relation to a horizontal (x).

2. Arrangement according to Claim 1, wherein the elastomer element (4) is arranged between the tension strap (3) and the vehicle-side bearing (10) in such a manner that
- the elastomer of the elastomer element (4) transmits all of the forces between the tension strap (3) and the vehicle-side bearing (10), and/or
- as the holding force acting on the fluid tank (1) by means of the tension strap (3) increases, the elastomer element (4) experiences an increasing compressive force.

3. Arrangement according to Claim 1 or 2, wherein the tension strap (3) is configured in such a manner that it fixes the fluid tank (1)
- with respect to a first direction (x) and
- with respect to a second direction (z), wherein the first direction (x) and the second direction (z) are oriented substantially orthogonally to each other.

4. Arrangement according to one of the preceding claims, wherein the inclination (φ) in relation to the horizontal (x) lies within the range of between 15° and 75°, preferably between 25° and 65°.

5. Arrangement according to one of the preceding claims, furthermore comprising a screw connection (7) which connects the first end of the tension strap (3) to the elastomer element (4).

6. Underbody assembly for a vehicle (2) comprising
- a fluid tank (1), in particular for receiving a fuel,
- elastic counter bearings (9) and
- an arrangement, in particular two arrangements, according to one of the preceding claims, wherein
the fluid tank (1) is arranged and pretensioned between the elastic counter bearings (9) and the tension strap (3) of the arrangement or the arrangements.

7. Underbody assembly according to Claim 6, wherein
- the tension strap (3) pretensions a base region of the fluid tank (1) in a substantially vertical direction (z) and pretensions a side region of the fluid tank (1) in a substantially horizontal direction (x).

8. Method for assembling an underbody assembly according to either of the preceding Claims 6 and 7, comprising the steps of:
- inserting (100) the fluid tank (1) into a cavity of the vehicle (2),
- fastening (200) a first end of the tension strap (3) to the vehicle-side bearing (10), and subsequently
- fastening (300) a second end of the tension strap (3) opposite the first end to the vehicle (2).

9. Vehicle comprising
- an arrangement according to one of Claims 1 to 5, and/or
- an underbody assembly according to either of Claims 6 and 7.

## Revendications

1. Agencement d'un réservoir de fluide (1) sur un véhicule (2), notamment un véhicule automobile, ledit agencement comprenant :
- une bande de serrage (3) pourvue d'une première et d'une deuxième extrémité,
- un palier côté véhicule (10) et
- un élément (4) en élastomère,
la bande de serrage (3) maintenant le réservoir de fluide (10) dans une cavité d'un dessous de caisse du véhicule (2),
le palier côté véhicule (10) étant conçu pour fixer la bande de serrage (3) au véhicule (2) avec la première extrémité, et l'élément (4) en élastomère étant disposé entre la bande de serrage (3) d'une part et le palier côté véhicule (10) d'autre part,
**caractérisé en ce que** la deuxième extrémité de la bande de serrage (3) est fixée au véhicule au moyen d'une liaison à vis (8) et
l'élément (4) en élastomère reposant sur le palier côté véhicule (10),
la première extrémité de la bande de serrage (3) étant disposée de manière coulissante par rapport au palier côté véhicule (10) par le biais de l'élément (4) en élastomère et
les forces entre l'élément (4) en élastomère et le palier côté véhicule (10) n'étant transmises que par friction et
le palier côté véhicule (10) présentant une inclinaison (φ) par rapport à une horizontale (x).

2. Agencement selon la revendication 1, l'élément (4) en élastomère étant disposé entre la bande de serrage (3) d'une part et le palier côté véhicule (10) d'autre part de telle sorte que
- l'élastomère de l'élément (4) en élastomère transmette la totalité des forces entre la bande de serrage (3) et le palier côté véhicule (10), et/ou
- l'élément (4) en élastomère subisse une force de pression qui augmente à mesure que la force de maintien, agissant sur le réservoir de fluide (1) par le biais de la bande de serrage (3), augmente.

3. Agencement selon la revendication 1 ou 2, la bande de serrage (3) étant conçue de manière à fixer le réservoir de fluide (1)
- par rapport à une première direction (x) et
- par rapport à une deuxième direction (z), la première direction (x) et la deuxième direction (z) étant orientées sensiblement orthogonalement l'une à l'autre.

4. Agencement selon l'une des revendications précédentes, l'inclinaison (φ) par rapport à l'horizontale (x) étant comprise entre 15° et 75°, de préférence entre 25° et 65°.

5. Agencement selon l'une des revendications précédentes, comprenant en outre une liaison à vis (7) qui relie la première extrémité de la bande de serrage (3) à l'élément (4) en élastomère.

6. Ensemble de dessous de caisse d'un véhicule (2), ledit ensemble comprenant
- un réservoir de fluide (1), destiné notamment à contenir un carburant,
- des paliers supports élastiques (9) et
- un agencement, notamment deux agencements, selon l'une des revendications précédentes,
le réservoir de fluide (1) étant disposé et précontraint entre les paliers supports élastiques (9) et la bande de serrage (3) de l'agencement ou des agencements.

7. Ensemble de dessous de caisse selon la revendication 6,
- la bande de serrage (3) exerçant une précontrainte sur une région inférieure du réservoir de fluide (1) dans une direction sensiblement verticale (z) et sur une région latérale du réservoir de fluide (1) dans une direction sensiblement horizontale (x).

8. Procédé de montage d'un ensemble de dessous de caisse selon l'une des revendications 6 ou 7 précédentes, ledit procédé comprenant les étapes suivantes :
- insérer (100) le réservoir de fluide (1) dans une cavité du véhicule (2),
- fixer (200) une première extrémité de la bande de serrage (3) au palier côté véhicule (10), puis
- fixer (300) une deuxième extrémité, opposée à la première extrémité, de la bande de serrage (3) au véhicule (2).

9. Véhicule comprenant
- un agencement selon l'une des revendications 1 à 5, et/ou
- un ensemble de dessous de caisse selon l'une des revendications 6 ou 7.
